## Europäisches Patentamt

(19) **European Patent Office**

**Office européen des brevets**

(11) Publication number: **0 086 200 B1**

(12) **EUROPEAN PATENT SPECIFICATION**

(45) Date of publication of patent specification: **05.12.90**

(51) Int. Cl.⁵: **G 01 B 11/24**

(21) Application number: **82902344.9**

(22) Date of filing: **12.08.82**

(86) International application number:
**PCT/AU82/00129**

(87) International publication number:
**WO 83/00738 03.03.83 Gazette 83/06**

(54) **OPTICAL DETERMINATION OF SURFACE PROFILES.**

(30) Priority: **14.08.81 AU 257/81**

(43) Date of publication of application:
**24.08.83 Bulletin 83/34**

(45) Publication of the grant of the patent:
**05.12.90 Bulletin 90/49**

(84) Designated Contracting States:
**AT BE CH DE FR GB LI LU NL SE**

(56) References cited:
**WO-A-80/02591**
**DE-A-2 412 359**
**FR-A-2 344 814**
**US-A-3 854 822**
**US-A-4 111 557**
**US-A-4 246 606**
**US-A-4 269 513**

**JAPAN. J. APPL. PHYS., vol. 14, 1975, suppl.
14-1, Proc. ICO Conf. Opt. Methods in Sci. and
Ind. Meas., pages 217-222, Tokyo, JP; A.D.
GARA: "Holographic technique for measuring
surfaces"**

(73) Proprietor: **THE BROKEN HILL PROPRIETARY
COMPANY LIMITED
BHP House 140 William Street
Melbourne, Victoria 3000 (AU)**

(72) Inventor: **KENYON, Michael
32 Falconer Street
Glen Waverley Vic. 3150 (AU)**
Inventor: **VAN HOEK, Hendrik Charles
17 Wolf Street
Wantirna South Vic. 3152 (AU)**

(74) Representative: **Lerwill, John et al
A.A. Thornton & Co. Northumberland House
303-306 High Holborn
London, WC1V 7LE (GB)**

Courier Press, Leamington Spa, England.

# EP 0 086 200 B1

**Description**

## Technical Field

The present invention relates to a method of, an apparatus for, providing information as to the cross-sectional shape or the profile of a body (such as steel bars or railway wheels), or for measuring the cross-sectional dimensions thereof. By using the present invention the shape or profile of the body may be compared to pre-established dimensional standards and/or the information obtained may be supplied to a forming or shaping apparatus so that a closed loop control of a forming process can be achieved.

## Background Art

In the production of continuous or semi-continuous materials by either a rolling, extruding or other forming processes, for example the manufacture of steel bar in a rolling mill, it is usually desired to obtain data on the cross-sectional shape and dimensions of that product at least at the finishing end of the process.

Present methods of inspection usually involve spot checking of product parameters by manual application of calipers, micrometers and specialized mechanical gauges. These methods are slow, infrequent and are not suitable for automatic control of the plant where the measured data must be used as feedback.

There are also systems currently available for non-contact measurements of product dimensions. The techniques used are for example, back lit shadow measurement or infra red image measurement and generally only determine the maximum dimension (e.g., diameter or width) in a field of view. These methods cannot provide unambiguous information on the shape of the body.

Method for determining the surface shape of bodies by a slit illumination technique and positioning of a sensing device at an oblique angle to the source of illumination have been described in United States Patent number 4111557 (Amerang and Riedering) and British Patent number 1491241 (Mathews and Beech). The specifications of these patents discuss the measurement of the change in shape or position of one face of an object — specifically, a turbine blade in the U.S. patent and a length of sawn or planed timber in the British patent. The image of the object observed by the viewing device, for example a video camera, in such systems is not subject to distortions due to the geometric relationships between the light source, object and camera. Consequently a precise knowledge or control of these geometric relationships is required if accurate dimensional or positional data are to be extracted from the above image.

Accordingly these systems are not particularly suited for use in typically vibration prone industrial environments wherein it would be expected that precise geometric arrangement of the systems would not be maintained for any considerable period of time. Therefore frequent system alignment would appear to be necessary in such a situation, and is seen as a major drawback in such systems.

In document DE—A—2412359 there is disclosed a method of measuring the contours of an object by generating a spatial interference field by illumination with coherent light and produced with the aid of a hologram, whereby an interference line pattern is created on an object and imaged. Spatial coordinates for object points are then calculated by a computer on the basis of stored data of the optical set-up and determined as a preliminary step in the absence of the object by measuring the positions of certain points lying in a reference plane, whereby the relation between the reference plane and image plane is obtained. This calibration of the optical set-up is performed only once upon initial assembly of the apparatus. The method and arrangement of the apparatus is not suited to the determination of cross-sectional profiles of continuous rods and bars and suffers similar drawbacks to those of the other prior art methods mentioned above.

## Disclosure of the Invention

The object of this invention it to provide a method and apparatus for providing information as to the cross-sectional shape or profile of the body which remove geometric distortions due to viewing geometry and thus enables accurate determination of the required information without the need for or reliance on rigid control of the geometry of the system.

It should be understood that the reference in this specification to the provision of information as to the cross-sectional shape or profile of the body includes information relating to the dimensions of the body, shape and relative location of the body. It should also be understood that reference to light in this specification includes non-visible as well as visible parts of the electromagnetic radiation spectrum. It should also be understood that reference to steel bars or metal bar in this specification includes rolled or extruded sections such as channel, angle, railway line and the like.

The present invention may be said to reside in a method of determining the cross sectional shape or profile of at least a portion of a surface of a body comprising:

providing a known datum having a true known shape;

detecting a said known datum with a detecting apparatus, said detecting known datum having a detected shape;

illuminating said body to produce reflected light from said body; characterised by

determining a geometrical image transformation from said detected known datum which would transform said shape of said detected known datum from an image plane to an object plane so as to provide said true known shape;

2

detecting said reflected light from said body with said detecting apparatus to provide preliminary profile of said body, said preliminary profile having a shape;

performing said geometrical image transformation on said preliminary profile to thereby change said shape of said preliminary profile to compensate for distortion due to the geometrical relationship between said detecting apparatus and said body, said geometrical image transformation transforming said preliminary profile from an image plane to an object plane so as to provide an indication of the true cross-sectional shape of said at least a portion of said surface of said body. The present invention also envisages an apparatus for determining the cross-sectional shape or profile of at least a portion of a surface of a body comprising:

known datum means, having a true known shape, for providing a known datum;

illuminating means for projecting light upon said body, said light being reflectable by said body;

sensing means for sensing said light reflected from said body; characterised by sensing means providing a detected known datum having a detected shape and a preliminary profile of said body, said preliminary profile of said body having a shape;

transforming means for determining a geometrical image transformation from said detected known datum which would transform said shape or said detected known datum from an image plane to an object plane so as to provide said true known shape and performing said geometrical image transformation on said preliminary profile to thereby change said shape of said preliminary profile to compensate for distortion due to the geometrical relationship between said sensing means and said body, said transforming means transforming said preliminary profile from an image plane to an object plane so as to provide an indication of the true cross-sectional shape of said at least a portion of said surface of said body.

Distortion caused by the viewing geometry of the sensor means will distort the datum. Accordingly the transformation of the preliminary information concerning the body in accordance with the variation between the detected datum and the known datum will compensate for that distortion so that more accurate information as to the cross-sectional shape or profile of the body will be obtained.

Image distortions introduced by the viewing geometry include those that can be classified as perspective, rotation, and scaling distortions. These can all be compensated for by the incorporation and imaging of a suitably designed datum.

Similarly any slight change in the geometry of the apparatus of the present invention will likewise be compensated for by the transformation of the preliminary information in accordance with the variation of the detected datum from the known datum.

In the preferred embodiment of the invention an accurate representation of the profile of the body can be displayed on a video screen. If the information required is the cross-sectional dimension of the body, this may readily be obtained by suitable processing means from the accurate representations of the body.

The present invention is also quite suitable for use in providing information in respect of a body which is in relative motion to the measuring system althought it will be appreciated that the invention is applicable to situations where the body and system are both stationary.

In the preferred embodiment of the invention the datum consists of a plurality of protrusions or a plurality of illuminated reference points and the sensor means comprises at least one camera, each or the camera being able to view at least four datum points which do not lie in a straight line. The preferred embodiment of the invention also provides that a number of sensor means be arranged around the body to provide several part images from multiple illumination means so that the part images may be combined and aligned by means of the datum to reconstruct a complete cross-sectional profile of the body.

Brief Description of the Drawings

Preferred embodiments of the invention will be described with reference to the accompanying drawings.

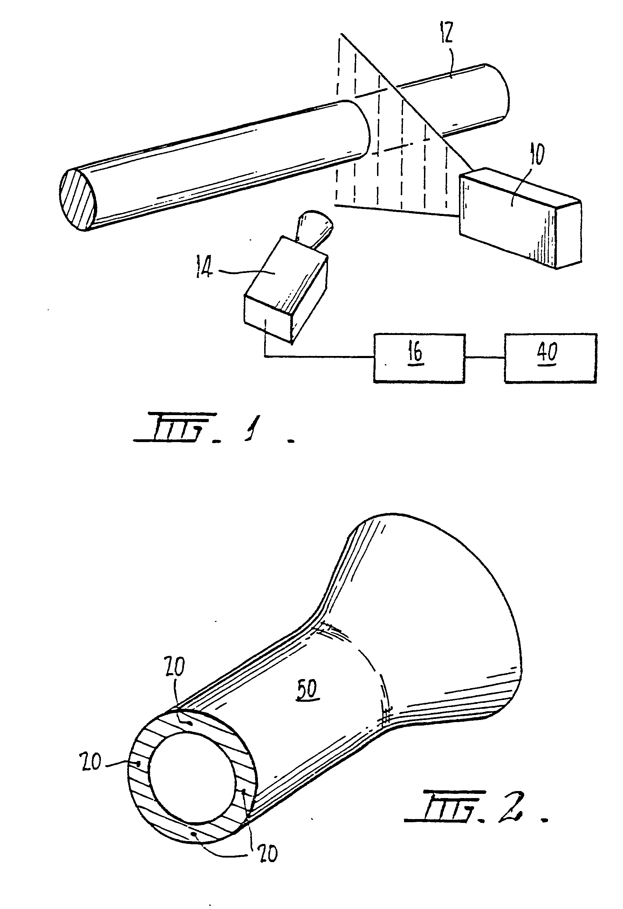

In the drawings Figure 1 shows a slit illumination technique which can be embodied in the present invention;

Figure 2 shows a guide assembly used in the production of rolled steel bars;

Figure 3 shows a display of a distorted image of a body;

Figure 4 shows a display of Figure 3 after transformation;

Figure 5 shows a preferred embodiment of the invention with Figures 5A showing transformed images, Figure 5B showing rotated images and Figure 5C showing a combined image;

Figure 6 shows a system for reference point generation;

Figure 7 shows a preferred reference datum, Figure 7A shows a display obtained with the reference datum of Figure 7; and

Figure 8 is a schematic view of a second application of the invention.

Modes for Carrying out the Invention

Referring to the drawings a slit light source 10 (which may include a laser) is shown which illuminates a steel bar 12 with a planar beam of light. The light is diffusely reflected from the steel bar and received by a camera 14 which is connected to an image processing computer 16 and a numeric and graphic output device 40 such as a video screen. In practice it may be preferable to have several coplanar light sources and cameras spaced around the bar.

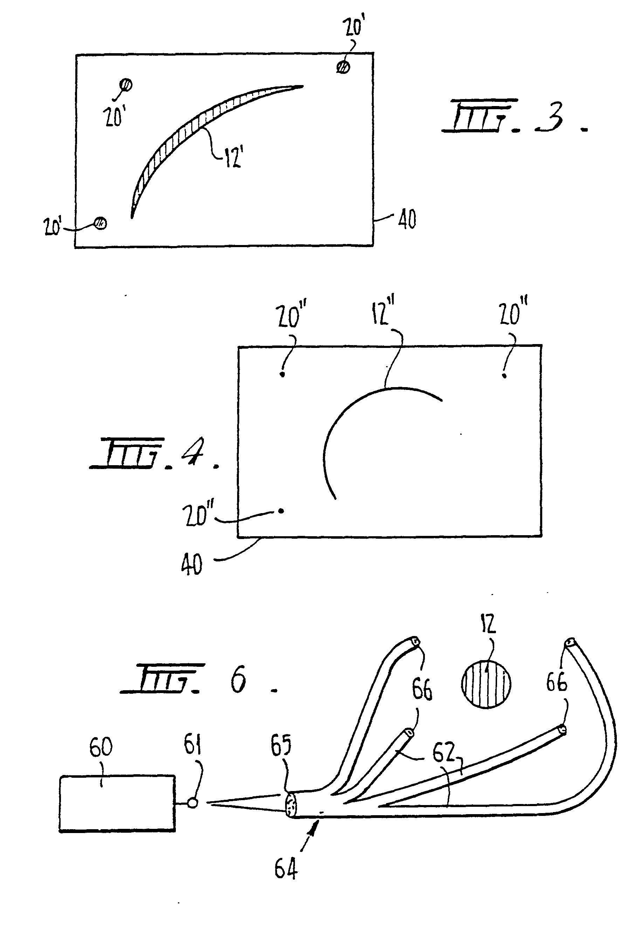

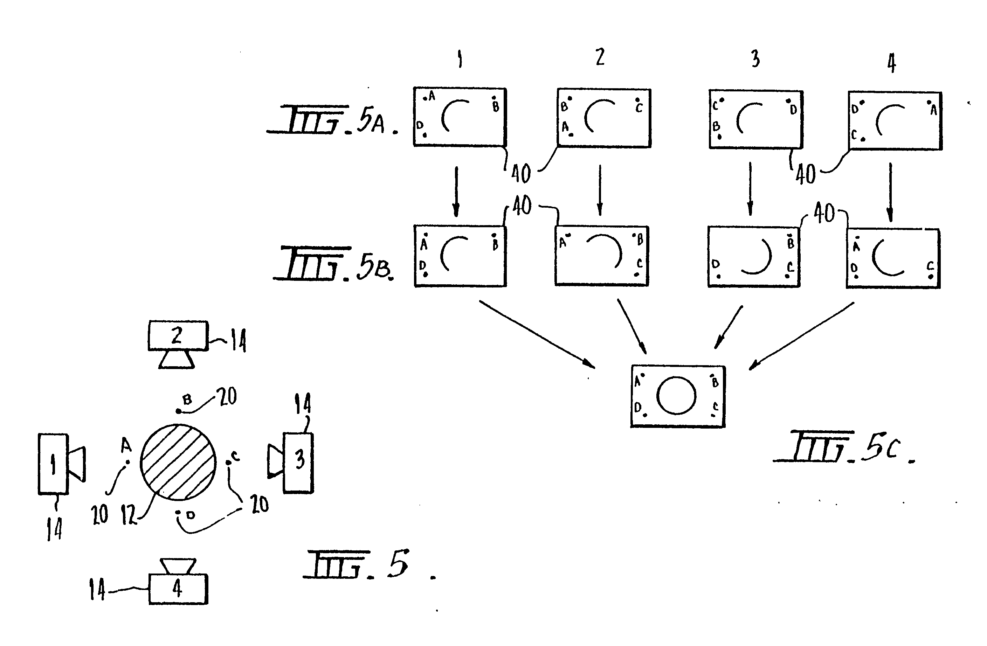

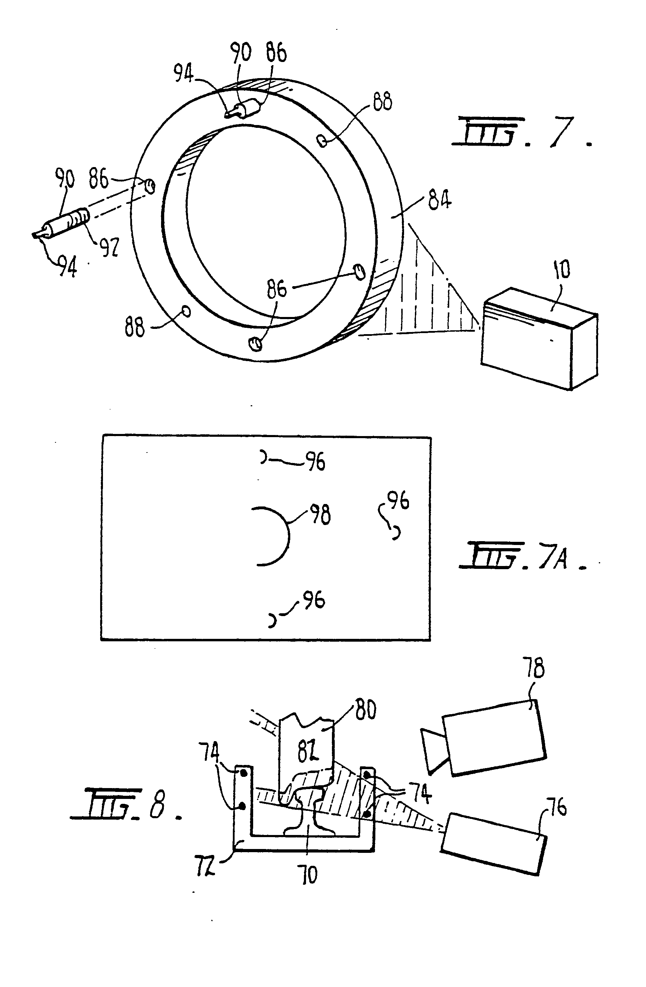

A number of illuminated reference points 20 are applied to a guide mechanism 50 (Figure 2) through which the rolled steel bar 12, for example, passes at a measurement station. The reference points 20 are arranged to lie as near as possible in the same plane as the multiple slit illumination sources, and the physical relationships between the reference points 20 is precisely controlled and fixed at the guide manufacturing stage. The reference points are arranged so that at least three are visible to each sensor (camera 14) when viewing a part image of the bar. In addition at least four reference points must be visible to each camera during a calibration phase prior to the measurement process. Such calibration may be performed when there is no bar 12 in the guide mechanism 50. On simple arrangement that can be used, is an array of four reference points, each one being precisely located on the corners of a square whose side dimension is slightly greater than the largest object which has to pass through the guide 50. A greater number of reference points may be required if more than one camera 14 is to be used, as in the embodiment of Figure 5, and each camera 14 views only a small section of the complete profile, to ensure that each camera 14 views at least three reference points 20 (which must not be in a straight line) during the measurement process and at least four reference points during the calibration process.

Accordingly each camera 14 receives an image containing one or more continuous sections consisting of arrays of bright picture elements or pixels representing the partial profile of the bar 12 being measured, plus at least three groups of bright pixels each representing a reference point 20. In the preferred procedure for analysis of such images each pixel is assigned a two dimensional (X,Y) address related to its location on the sensor array of each camera 14. The geometric centre of each reference point can therefore be determined electronically by consideration of the X,Y addresses assigned to individual pixels forming the image of each reference point 20. Consequently the apparent geometric relationship between the image of the reference points 20 can be determined. Given that the true physical relationship between the reference points is fixed and known it is possible to define a series of transformations which will convert the calculated centres of these reference points as seen by the camera to new values which will conform with the true or physical relationship on the guide 50, for example, the corners of a square.

In summary, the relationships between the reference points has been distorted by the viewing geometry of the sensor arrangement, these distortions have been eliminated by means of a series of transformations determined by considering the apparent relationships between the reference point images as compared to the known relationship between the reference points on the guide 50.

As all points in the camera field of view are subject to the same geometric distortions, it is apparent that the transformations applied to the reference points can also be applied to the pixel coordinates representing the partial object image in an identical fashion. This will result in the elimination of the geometric distortions which have been imposed on the object image itself (Figure 4). Hence the object image has been transformed from the plane of the sensor to the plane of the illumination source thus enabling accurate and true dimensional and positional data to be extracted from this transformed image by electronic processing methods.

Furthermore, in the case where multiple sources (not shown in Figures 4) illuminate the bar 12 in the same plane but from different radial directions and where multiple cameras 14 view segments of the bar profile so illuminated, it is possible, provided that images of reference points and object for adjacent cameras overlap, to rejoin the partial images by a simple rotation of the already transformed images so that the reference points which are known to overlap are in fact coincident with the correct geometric relationships between all points. In effect this is equivalent to aligning the multiple partial images on a common coordinate system corresponding to the plane of the illumination sources. The partial images will now be found to overlap such that they precisely represent the cross-sectional profile of the body. Standard processing techniques can now be applied to this reconstructed image to extract object dimensional and shape data as required.

With further reference to Figures 3 to 5, it will be evident that the image detected by each camera 14 will be three reference points 20' and portion 12' of the profile of bar 12. After suitable transformation of the images of the reference points 20' to new values 20'' which conform with the true of physical relationship of the points 20 on guide 50 and the same transformation is applied to portion 12' a true image 12'' of the profile of the bar 12 is obtained. Excess pixels of this image may be removed by standard techniques to provide a clearer indication of the true contour on video screen 40.

In Figure 5 four cameras are arranged about the bar 12 each receiving an image of three reference points 20 and a portion of the profile of the bar. For clarity the slit light sources are not shown. It will be noted that each camera sees a different set of the three reference images labeled A to D in Figure 5. The processing of the images seen by each camera follows the steps of removing excess pixels, transformation, and joining ends in that order. In order to obtain the true profile of the bar 12 the processing includes a transformation as described above and a rotation. The centres of the images of points A to D seen by each camera are transformed to conform with the true or physical relationship of the points 20 (Figure 5A). The images are then rotated (Figure 5B) so that the reference points A to D are in the same position on screen 40 and the images from each camera 14 are then combined (Figure 5C) to form the true image of the profile of bar 12.

One preferred imaging transformation which may be utilized in the invention is as follows:

$$\begin{pmatrix} x_i' \\ y_i' \\ z_i' \\ w_i' \end{pmatrix} = P.L.T.R_1(\phi).R_2(\theta).R_3(\beta) \begin{pmatrix} x_0 \\ y_0 \\ z_0 \\ 1 \end{pmatrix}$$

wherein the $x_i'$ etc. are the homogeneous image coordination and the $x_0$ etc. are the coordinates of a point in object space. The true image points are then given by

$$\begin{pmatrix} x_i \\ y_i \\ z_i \end{pmatrix} = \begin{pmatrix} x_i' \\ y_i' \\ z_i' \end{pmatrix} \begin{pmatrix} w_i' \end{pmatrix}^{-1}$$

The matrix P defines the nonlinear perspective transformation.

$$P = \begin{bmatrix} f & 0 & 0 & 0 \\ 0 & f & 0 & 0 \\ 0 & 0 & f & 0 \\ 0 & 1 & 0 & f \end{bmatrix}$$

L defines the translation from the lens coordinates to the sensor image plane coordinates and T defines the translation from the object coordinate frame to the lens coordinate frame.

The matrices $R_1$, $R_2$, $R_3$ define the angular displacements of the camera system from the object coordinate frame and are used to correct for pan, tilt and rotation of the camera with respect to the object frame.

From a knowledge of the system parameters the inverse transformations give the projection of any point in the image space into the object space and the object can be reconstructed from the image.

The mathematics of the above transformation processes are well known to those skilled in the art of mathematical analysis of images.

A method of generating the said reference points will be described with reference to Figure 6. The source of illumination for the object may be a laser. This is particularly desirable when measuring a hot body which emits visible and infra red radiation which interferes with the externally applied illumination. The use of lasers permits the use of very selective optical filters at the sensor array or arrays to eliminate most of the background visible or infra red radiation while passing the diffusely reflected laser light with minimum attenuation. In this situation it is essential that the source of illumination for the reference points also be laser of the same wavelength as those used for the body illumination so that the reference point radiation will also pass through the optical filters.

Due to the vibration, heat and mechanical constraints it is impossible or impractical to consider mounting lasers directly on the product guide mechanism to form the reference points. A further refinement of the technique detailed here is therefore the use of optical fibers to transmit the light from a remotely mounted laser 60 to form each of the reference points. In this embodiment use is made of bundles 62 of very fine glass threads which are packaged together to create an optical fibre bundle 64. Four such bundles are joined together at one end 65 and illuminated by a common laser 60 remote from the guide assembly 50 (Figure 2) via a lens 61. The other ends 66 of each of the four small bundles are individually polished and mounted so as to protrude from the front face of the guide in the field of view of the cameras 14, and close to the plane of illumination of the slit projecting lasers (light source 10). The laser light thus emitted from the ends 60 of the polished fibres forms the reference point sources directly. Miniature lenses could be fitted to the ends of the fibres if special dispersion characteristics are required.

Figure 7 shows an alternative manner of forming the reference points. In this embodiment a ring 84 is provided with four screw thread holes 86. The ring 84 is connected to the outlet of a guide member, similar

EP 0 086 200 B1

to that shown in Figure 2, by any suitable means such as bolts which pass thorugh openings 88 in the ring. The four threaded holes 86 each receive a pin 90 which has a screw threaded shank 92 for allowing the pins 90 to be screwed into holes 86. The protrusion 94 forming the outer portion of each pin 90 is of small circular cross-section. Lasers 10 (only one shown in Figure 7) are arranged to project a thin beam of light across the protrusions 94.

The display obtained by a suitable arranged camera (not shown) is shown in Figure 7A. The illuminated protrusions 94 appear as small arcs 96, and the bar which passes through the ring 84 appears as a crescent 98 as in the previously described embodiment. The centre of curvature of arcs 96 can be determined by standard techniques to give the position of the reference points, being at the centre of protrusions 94. Instead of providing the pins 90 on a ring 84, the holes 86 could be drilled into the bar guide itself in the positions of the points 20 in Figure 2 and the pins 90 could be screwed directly into the guide shown in Figure 2. Of course if the protrusions 94 are utilized it is not necessary to provide the guide with the optical fibres previously described.

Figure 8 is a schematic view of an embodiment of the invention applied to monitoring the wear surface a railway wheel from a track side mounted measuring station as the railway wheels pass the measuring station. The rail 70 has a frame member 72 arranged thereunder on which four reference points 74 are located. The reference points 74 may be formed in any of the ways described above. A planar light source 76 is arranged beside the rail 70 to illuminate the wear surface, comprising the tread inside flange and root areas, of the wheel 80 with a thin beam of light so that camera 78 views the line 82, projected onto the wear surface of the wheel 80, along with three of the reference points 74. The exact positions of the reference points 74 are known and the image formed in the camera 78 is processed as described above to transform the points 74 and also the image of the line 82 to obtain a true indication of the contour of the wear surface of the wheel 80. Therefore information is obtained which allows the amount of wear to the wheel to be determined. The wheel can therefore be monitored and rectified or replaced as required.

The reference point technique proposed here is seen as a means of overcoming the limitations of existing profile measurement by slit illumination techniques. Specifically, the technique enables the determination of the size, shape and location of either a part or the complete surface profile of an object to a high degree of accuracy without the need for precise and frequent alignment or vibration isolation of the sensing devices.

It is also possible to apply the same reference point system to the measurement of discrete items which may be transmitted along a conveyor belt or passed through or mounted in a measuring station to which reference points may be attached. Examples of this type of measurement include the inspection of forged, case or machined components at the production stage.

Since modifications within the spirit and scope of the invention may readily be effected by persons skilled within the art, it is to be understood that this invention is not limited to the particular embodiments described by way of example hereinabove.

**Claims**

1. A method of determining the cross-sectional shape or profile of at least a portion of a surface of a body (12) comprising:
   providing a known datum (20, 94) having a true known shape;
   detecting a said known datum (20, 94) with a detecting apparatus (14), said detecting known datum (20, 94) having a detected shape;
   illuminating said body (12) to produce reflected light from said body (12); characterised by
   determining a geometrical image transformation from said detected known datum (20, 94) which would transform said shape of said detected known datum (20, 94) from an image plane to an object plane so as to provide said true known shape;
   detecting said reflected light from said body (12) with said detecting apparatus (14) to provide preliminary profile of said body (12), said preliminary profile having a shape;
   performing said geometrical image transformation on said preliminary profile to thereby change said shape of said preliminary profile to compensate for distortion due to the geometrical relationship between said detecting apparatus and said body (12), said geometrical image transformation transforming said preliminary profile from an image plane to an object plane so as to provide an indication of the true cross-sectional shape of said at least a portion of said surface of said body (12).

2. An apparatus for determining the cross-sectional shape or profile of at least a portion of a surface of a body (12) comprising:
   known datum means (20, 94), having a true known shape, for providing a known datum (20, 94);
   illuminating means (10, 60) for projecting light upon said body (12), said light being reflectable by said body (12);
   sensing means (14) for sensing said light reflected from said body (12); characterised by sensing means (14) providing a detected known datum (20, 94) having a detected shape and a preliminary profile of said body (12), said preliminary profile of said body (12) having a shape;
   transforming means (16) for determining a geometrical image transformation from said detected known datum (20, 94) which would transform said shape or said detected known datum (20, 94) from an image plane to an object plane so as to provide said true known shape and performing said geometrical image transformation on said preliminary profile to thereby change said shape of said preliminary profile to compensate for distortion due to the geometrical relationship between said sensing means (14) and said body (12), said transforming means (16) transforming said preliminary profile from an image plane to an object plane so as to provide an indication of the true cross-sectional shape of said at least a portion of said surface of said body (12).

3. The method according to claim 1 wherein said known datum (20, 94) provided is formed by a plurality of light sources (20).

4. The method according to claim 1 wherein the known datum (20, 94) provided is formed by a plurality of protrusions (94).

5. The method according to claim 1 wherein said body (12) is illuminated with light from a laser (10).

6. The method according to claim 1 wherein the reflected light and body (12) are detected by at least one camera (14) as said detecting apparatus (14).

7. The method according to claim 6 wherein a plurality of cameras (14) are arranged around said body (12) to detect the entire surface of the body (12).

8. The method according to claim 1 wherein the plurality of light sources (20) is formed by conducting light through optical fibres (62) and arranging ends of said optical fibres (62) at pre-determined points so that light is emitted from the ends of the optical fibres (62).

9. The method according to claim 4, wherein said protrusions (94) are pins (94) of substantially circular cross-section.

10. The apparatus according to claim 2 wherein said known datum means (20, 94) comprises a plurality of light sources (10, 60) as illuminating means (10, 60).

11. The apparatus according to claim 2 wherein said known datum means (20, 94) comprises a plurality of protrusions (94).

12. The apparatus according to claim 2 wherein said illumination means (10, 60) is a laser (10).

13. The apparatus according to claim 2 wherein said sensing means (14) comprises at least one camera (14).

14. The apparatus according to claim 2 wherein a sensing means (14), a plurality of cameras (14) is arranged around said body (12) to view the surface of said body (12) whereby to ascertain the shape or profile of the body (12).

15. The apparatus according to claim 10 wherein said plurality of light sources (10, 60) is formed by optical fibres (62) with the ends of said optical fibres (62) arranged in proximity to said body (12).

16. The apparatus according to claim 15 wherein said body (12) is a steel bar (12) and said optical fibres (62) are formed in a guide mechanism (50) for said steel bar (12), the ends of said optical fibres (62) being arranged around the outlet of the guide mechanism (50).

17. An apparatus according to claim 2 wherein said transforming means (16) is an image processing computer (16).

18. The apparatus according to claim 11, wherein said protrusions (94) are pins (94) of substantially circular cross-section.

19. The apparatus according to claim 18, wherein said body (12) is a steel bar (12) and said pins (94) have screw threaded shanks for enabling the pins (94) to be screwed into screw threaded holes provided in a guide mechanism (50) or into screw threaded holes provided in a ring which is adapted to be connected to said guide mechanism (50).

## Patentansprüche

1. Ein Verfahren zur Bestimmung der Querschnittsform oder des Profils von wenigstens einem Teil einer Oberfläche eines Körpers (12), mit den Verfahrensschritten:

Bereitstellen einer bekannten Bezugsgröße (20, 94) die eine wahre bekannte Form aufweist;

Erfassen der bekannten Bezugsgröße (20, 94) mit einer Detektoreinrichtung (14), wobei die erfäßte bekannte Bezugsgröße (20, 94) eine erfaßt Form aufweist;

Beleuchten des Körpers (12) um reflektiertes Licht von dem Körper (12) zu erzeugen; gekennzeichnet durch

Bestimmen einer geometrischen Bildtransformation aus der erfäßten bekannten Bezugsgröße (20, 94), welche die Form der erfäßten bekannten Bezugsgröße (20, 94) von einer Bildfläche auf eine Objektfläche transformieren würde, um so die wahre bekannte Form zu schaffen;

Erfassen des reflektierten Lichts von dem Körper (12) mit der Detektoreinrichtung (14), um ein vorläufiges Profil des Körpers (12) zur Verfügung zu stellen, wobei das vorläufige Profil eine Form aufweist;

Ausführen der geometrischen Bildtransformation mit dem verläufigen Profil, um dadurch die Form des vorläufigen Profils zu ändern, um eine Deformation infolge der geometrischen Beziehung zwischen der Detektoreinrichtung und dem Körper (12) zu kompensieren, wobei die geometrische Bildtransformation das vorläufige Profil von einer Bildfläche auf eine Objektfläche transformiert, um so für eine Anzeige der wirklichen Querschnittsform des wenigstens einen Teils der Oberfläche des Körpers (12) zu sorgen.

2. Eine Vorrichtung zur Bestimmung der Querschnittsform oder des Profils von wenigstens einem Teil der Oberfläche eines Körpers (12), mit:

7

einer Bezugsgrößen-Einrichtung (20, 94), die eine wahre bekannte Form aufweist, um eine bekannte Bezugsgröße (20, 94) zur Verfügung zu stellen;

eine Beleuchtungseinrichtung (10, 60) zum Projizieren von Licht auf den Körper (12), wobei das Licht durch den Körper (12) reflektierbar ist;

eine Sensoreinrichtung (14) zum Erfassen des von dem Körper (12) reflektierten Lichts; gekennzeichnet durch

eine Sensoreinrichtung (14), die eine erfaßte bekannte Bezugsgröße (20, 94) mit einer ermittelten Form und ein vorläufiges Profil des Körpers (12) liefert, wobei das vorläufige Profil des Körpers (12) eine Form aufweist;

eine Transformiereinrichtung (16) zum Bestimmen einer geometrischen Bildtransformation aus der erfaßten bekannten Bezugsgröße (20, 94), welche die Form der ermittelten bekannten Größe (20, 94) von einer Bildfläche zu einer Objektfläche transformieren würde, um so die wahre bekannte Form zu liefern, und zum Ausführen der geometrischen Bildtransformation mit dem vorläufigen Profil, um dadurch die Form des vorläufigen Profils zu ändern, um eine Deformation infolge der geometrischen Beziehung zwischen der Sensoreinrichtung (14) und dem Körper (12) zu kompensieren, wobei die Transformationseinrichtung (16) das vorläufige Profil von einer Bildfläche auf eine Objektfläche transformiert, um so eine Angabe für die wahre Querschnittsform von wenigstens einem Teil einer Oberfläche des Körpers (12) zu liefern.

3. Das Verfahren nach Anspruch 1, wobei die zur Verfügung gestellte Bezugsgröße (20, 94) durch eine Vielzahl von Lichtquellen (20) gebildet ist.

4. Das Verfahren nach Anspruch 1, wobei die zur Verfügung gestellte Bezugsgröße (20, 94) durch eine Vielzahl von Vorsprüngen (94) gebildet ist.

5. Das Verfahren nach Anspruch 1, wobei der Körper (12) mit Licht von einem Laser (10) beleuchtet wird.

6. Das Verfahren nach Anspruch 1, wobei das reflektierte Licht und der Körper (12) durch wenigstens eine Kamera (14) als Detektoreinrichtung (14) erfaßt werden.

7. Das Verfahren nach Anspruch 6, wobei eine Vielzahl von Kameras (14) um den Körper (12) angeordnet sind, um die gesamte Oberfläche des Körpers (12) zu erfassen.

8. Das Verfahren nach Anspruch 3, wobei die Vielzahl von Lichtquellen (20) durch Leiten von Licht durch optische Fasern (62) und Anordnen der Enden der optischen Fasern (62) an vorbestimmten Punkten gebildet ist, so daß Licht von den Enden optischen Fasern (62) emittiert wird.

9. Das Verfahren nach Anspruch 4, wobei die Vorsprünge (14) Stifte (94) von im wesentlichen kreisförmigen Querschnitt sind.

10. Die Vorrichtung nach Anspruch 2, wobei die Bezugsgrößen-Einrichtung (20, 94) eine Vielzahl von Lichtquellen (10, 60) als Beleuchtungseinrichtung (10, 60) umfaßt.

11. Die Vorrichtung nach Anspruch 2, wobei die Bezugsgrößen-Einrichtung (20, 94) eine Vielzahl von Vorsprüngen (94) umfaßt.

12. Die Vorrichtung nach Anspruch 2, wobei die Beleuchtungseinrichtung (10, 60) ein Laser (10) ist.

13. Die Vorrichtung nach Anspruch 2, wobei die Sensoreinrichtung (14) wenigstens eine Kamera (14) umfaßt.

14. Die Vorrichtung nach Anspruch 2, wobei als Sensoreinrichtung (14) eine Vielzahl von Kameras (14) um den Körper (12) angeordnet ist, um die Oberfläche des Körpers (12) zu beobachten, um dadurch die Form oder das Profil des Körpers (12) festzustellen.

15. Die Vorrichtung nach Anspruch 10, wobei die Vielzahl von Lichtquellen (10, 60) durch optische Fasern (62) gebildet sind, wobei die Enden der optischen Fasern (62) in der Nähe des Körpers (12) angeordnet sind.

16. Die Vorrichtung nach Anspruch 15, wobei der Körper (12) eine Stahlstange (12) und die optischen Fasern (62) in einem Führungsmechanismus (50) für die Stahlstange (12) gebildet sind, wobei die Enden der optischen Fasern (62) um den Ausgang der Führungseinrichtung (50) herum angeordnet sind.

17. Die Vorrichtung nach Anspruch 2, wobei die Transformationseinrichtung (16) ein Bildverarbeitungscomputer (16) ist.

18. Die Vorrichtung nach Anspruch 11, wobei die Vorsprünge (94) Stifte (94) von im wesentlichen kreisförmigem Querschnitt sind.

19. Die Vorrichtung nach Anspruch 18, wobei der Körper (12) eine Stahlstange (12) ist und die Stifte (94) mit einem Schraubengewinde versehene Schäfte aufweisen, um die Stifte (94) in mit einem Schraubengewinde versehene Löcher, die in dem Führungsmechanismus (50) vorgesehen sind, oder in Gewindelöcher, die in einem Ring, welcher dazu vorgesehen ist, mit dem Führungsmechanismus (50) verbunden zu werden, einschrauben zu können.

**Revendications**

1. Procédé de détermination de la forme en section droite ou de profil d'au moins une partie de la surface d'un corps (12), comprenant les opérations suivantes:

produire une donnée connue (20, 94) ayant une forme connue vraie;

détecter ladite donnée connue (20, 94) à l'aide d'une appareil de détection (14), ladite donnée connue

# EP 0 086 200 B1

détectée (20, 94) ayant une forme détectée;

éclairer ledit corps (12) afin de produire de la lumière réfléchie à partir dudit corps (12); caractérisé par les opérations suivantes:

déterminer, à partir de ladite donnée connue détectée (20, 94), un transformation d'image géométrique, quie transformerait ladite forme de ladite donnée connue détectée (20, 94) d'un plan image en un plan objet de façon à produire ladite forme connue vraie;

détectér ladite lumière réfléchie par ledit corps (12) à l'aide dudit appareil de détection (14) afin de produire un profil préliminaire dudit corps (12), ledit profil préliminaire ayant une forme;

appliquer ladite transformation d'image géométrique sur ledit profil préliminaire afin de modifier ladite forme dudit profil préliminaire pour compenser les distorsions dues à la relation géométrique existant entre ledit appareil de détection et ledit corps (12), ladite transformation d'image géométrique transformant ledit profil préliminaire d'un plan image à une plan objet de manière à produire une indication de la forme en section droite vraie de ladite partie de ladite surface dudit corps (12).

2. Appareil permettant de déterminer la forme en section droite ou le profil d'au moins une partie de la surface d'un corps (12), comprenant:

un moyen (20, 94) de production de donnée connue, possédant une forme connue vraie, servant à produire une donnée connue (20, 94);

un moyen d'éclairement (10, 60) servant à projeter de la lumière sur ledit corps (12), ladite lumière pouvant être réfléchie par ledit corps (12);

un moyen de détection (14) servant à détecter ladite lumière réfléchie par ledit corps (12); caractérisé par le fait que ledit moyen de détection (14) produit une donnée connue détectée (20, 94) ayant une forme détectée et un profil préliminaire dudit corps (12), ledit profil préliminaire dudit corps (12) ayant une forme;

et par un moyen de transformation (16) servant à déterminer, à partir de ladite donnée connue détectée (20, 94), une transformation d'image géométrique, qui tranformerait ladite forme de ladite donnée connue détectée (20, 94) d'un plan image en un plan objet afin de produire ladite forme connue vraie et à appliquer ladite transformation d'image géométrique sur ledit profil préliminaire afin de modifier ladite forme dudit profil préliminaire pour compenser les distorsions dues à la relation géométrique existant entre ledit moyen de détection (14) et ledit corps (12), ledit moyen de transformation (14) transformant ledit profil préliminaire d'un plan image en un plan objet de façon à produire une indication de la forme en section droite vraie de ladite partie de ladite surface dudit corps (12).

3. Procédé selon la revendication 1, où ladite donnée connue (20, 94) produite est formée par plusieurs sources de lumière (20).

4. Procédé selon la revendication 1, où ladite donnée connue (20, 94) produite est formée par plusieurs parties saillantes (94).

5. Procédé selon la revendication 1, où ledit corps (12) est éclairé à l'aide de la lumière venant d'un laser (10).

6. Procédé selon la revendication 1, où la lumière réfléchie et le corps (12) sont détéctes par au moins un appareil des prise de vues (14) faisant fonction dudit appareil de détection (14).

7. Procédé selon la revendication 6, où plusieurs appareils de prise de vues (14) sont disposés autour dudit corps (12) de façon à détecter toute la surface dudit corps (12).

8. Procédé selon la revendication 3, où un forme les sources lumineuses (20) en conduisant la lumière dans des libres optiques (62) et en disposant les extrémités desdites fibres optiques (62) en des points prédéterminés, si bien que de la lumière est émise par les extrémités des fibres optiques (62).

9. Procédé selon la revendication 4, où lesdites parties saillantes (94) sont des tiges (94) à section droite sensiblement circulaire.

10. Appareil selon la revendication 2, où ledit moyen (20, 94) de production de donnée connue comprend plusieurs sources lumineuses (10, 60) faisant fonction du moyen d'éclairement (10, 60).

11. Appareil selon la revendication 2, où ledit moyen (20, 94) de production de donnée connue comprend plusieurs parties saillantes (94).

12. Appareil selon la revendication 2, où ledit moyen d'éclairement (10, 60) est un laser (10).

13. Appareil selon la revendication 2, où ledit moyen de détection (14) comprend au moins appareil de prise de vues (14).

14. Appareil selon la revendication 2, où, pour faire fonction du moyen de détection (14), plusieurs appareils de prise de vues (14) sont disposés autour dudit corps (12) de façon à voir la surface dudit corps (12) pour s'assurer de la forme ou du profil du corps (12).

15. Appareil selon la revendication 10, où lesdites sources de lumière (10, 60) sont formées par des fibres optiques (62), dont les extrémités sont disposées à proximite dudit corps (12).

16. Appareil selon la revendication 15, où ledit corps (12) est une barre d'acier (12) et lesdites fibres optiques (62) sont formées dans un mécanisme de guidage (50) relatif à ladite barre d'acier (12), les extrémités desdites fibres optiques (62) étant disposées autour de la sortie du mécanimse de guidage (50).

17. Appareil selon la revendication 2, où ledit moyen de transformation (16) est un ordinateur de traitement d'image (16).

18. Appareil selon la revendication 11, où lesdites parties saillantes (94) sont des tiges (94) à section droite sensiblement circulaire.

19. Appareil selon la revendication 18, où ledit corps (12) est une barre d'acier (12) et lesdites tiges (94)

9

possèdent des queues de fixation filetées destinées à permettre de visser les tiges (94) dans des trous taraudés ménagés dans un mécanisme de guidage (50) ou dans des trous taraudés ménagés dans une anneau qui est conçu pour être connecté audit mécanisme de guidage (50).

_FIG. 1._

_FIG. 2._

1

FIG. 3.

FIG. 4.

FIG. 6.

FIG.5A.

FIG.5B.

FIG.5c.

FIG.5.

EP 0 086 200 B1

FIG. 7.

FIG. 7A.

FIG. 8.